# EUROPEAN PATENT APPLICATION

(11) **EP 2 357 602 A1**
(43) Date of publication of application: **17.08.2011**
(21) Application number: 09824747.1
(22) Date of filing: 30.10.2009
(51) Int. Cl.: G06Q 50/00

(54) **SHELF LABEL MANAGING SYSTEM, SHELF LABEL MANAGING METHOD AND SHELF LABEL MANAGING APPARATUS**

(30) Priority: 10.11.2008 JP 2008287340
(71) Applicant: Seiko Instruments Inc., Chiba-shi Chiba 261-8507 (JP)
(72) Inventor: OKINA, Shigetaka, Chiba-shi Chiba 261-8507 (JP)
(74) Representative: Cloughley, Peter Andrew
(86) International application number: PCT/JP2009/068645
(87) International publication number: WO 2010/053047

(57) **Abstract**

Provided is a shelf label management system that offers improved convenience to a user. Each of a plurality of electronic shelf label terminals detects power-on and determines, based on the detection of the power-on, whether a system ID, which indicates the shelf label management system in which the electronic shelf label terminal is to enter, is recorded in a storage unit. If the system ID is not recorded in the storage unit, the electronic shelf label terminal transmits, to a shelf label management apparatus, a system entry request containing the terminal ID of the electronic shelf label terminal. The shelf label management apparatus receives the system entry request from the each of the plurality of electronic shelf label terminals in a period from a start time of a registration request receiving period to an ending time thereof, and registers, with a shelf label management table in a database, the terminal ID of the electronic shelf label terminal that has made the system entry request, as a terminal ID of an electronic shelf label terminal that can be registered in the shelf label management apparatus. The shelf label management apparatus then transmits, in response to the reception of the system entry request, a system entry completion notification to the electronic shelf label terminal that has transmitted the system entry request.

## Description

### Technical Field

The present invention relates to a shelf label management system, a shelf label management method, and a shelf label management apparatus, which are used for managing electronic shelf label terminals for displaying names, prices, etc. of products.

### Background Art

With the aim of, for example, saving the trouble of replacing shelf labels when product names or product prices are changed, electronic shelf label terminals for displaying names, prices, etc. of products have been conventionally used in retail stores such as supermarkets, and a technology relating to an electronic shelf label system used therefor is disclosed in Patent Literature 1.

### Citation List

### Patent Literature

Patent Literature 1: JP 2008-168057 A

### Summary of Invention

### Technical Problem

By the way, when the electronic shelf label terminals are attached to shelves in a store, in some cases, there are as many as 7,000 to 10,000 kinds of products, and the same number of electronic shelf label terminals are accordingly required. In order for all the electronic shelf label terminals to be managed as terminals to be used in one store, it is necessary to register one unique piece of identification information for each of the electronic shelf label terminals or to register the terminal ID of each of the electronic shelf label terminals with a shelf label management apparatus such as a server. Further, in view of the fact that the electronic shelf label terminal and the shelf label management apparatus transmit/receive information to/from each other via a relay apparatus through wireless communication, a task of registering the above-mentioned identification information needs to be performed as follows, to give an example. That is, at the time of registering the above-mentioned identification information, all the electronic shelf label terminals to be placed in the store are collected in a given particular room in which the relay apparatus is placed, and the electronic shelf label terminals and the shelf label management apparatus are caused to communicate to each other with a low power radio wave so as to prevent the identification information from leaking to a shelf label management apparatus owned by an adjacent store and being registered therewith.

However, it takes a great deal of trouble for a user to carry out such processing of collecting, in one room, all the electronic shelf label terminals to be placed in the store for the system registration, and hence there is a demand that this task be reduced. In addition, it is necessary to prevent information of an adjacent store from being registered with the shelf label management apparatus because of a signal transmitted from an electronic shelf label terminal existing in the adjacent store.

In view of this, the present invention has an object to provide a shelf label management system and a shelf label management method which offer improved convenience to a user.

### Solution to Problem

In order to achieve the above-mentioned object, according to the present invention, there is provided a shelf label management system, including: a plurality of electronic shelf label terminals; and a shelf label management apparatus, in which: the shelf label management apparatus includes: system entry request receiving means for receiving a system entry request from each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system; terminal identification information registering means for registering, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system; system entered-state information registering means for giving permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and system entry completion notification transmitting means for transmitting a system entry completion notification to the each of the plurality of electronic shelf label terminals that has transmitted the system entry request, in response to the registration by the system entered-state information registering means of the fact that the each of the plurality of electronic shelf label terminals is entered in the shelf label management system; and the plurality of electronic shelf label terminals each include system entry request transmitting means for transmitting the system entry request to the shelf label management apparatus, the system entry request making the request for the entry to the shelf label management system so that the each of the plurality of electronic shelf label terminals is registered as the terminal available for use in the shelf label management system.
With this configuration, in the shelf label management apparatus, it is possible to simultaneously perform the registration of the identification information of the electronic shelf label terminal available for use in the shelf label management system and the registration of the electronic shelf label terminal that has not been entered in the system as being entered therein. The user does not need to manually register the terminal identification information one by one for a large number of electronic shelf label terminals. Therefore, it is possible to reduce a task load, and also to reduce registration errors such as double registration of the terminal identification information and incorrect input of the terminal identification information.
Further, the electronic shelf label terminal acquires the system entry completion notification from the shelf label management apparatus. Therefore, for example, when it is necessary to conduct an investigation as to a state indicating whether the electronic shelf label terminal is entered in the system, it is possible to understand the state accurately by examining both the electronic shelf label terminal and the shelf label management apparatus.

Further, in the above-mentioned shelf label management system according to the present invention: the plurality of electronic shelf label terminals each include: power-on detecting means for detecting power-on; and registration completion determining means for determining, based on the detection of the power-on, whether or not system identification information for identifying the shelf label management system in which the each of the plurality of electronic shelf label terminals is to enter is recorded in storage means; and when the system identification information is not recorded in the storage means, the system entry request transmitting means transmits the system entry request containing the terminal identification information for identifying the each of the plurality of electronic shelf label terminals to the shelf label management apparatus.
With this configuration, with only a simple operation of powering on the shelf label management apparatus, it is possible to cause the electronic shelf label terminal that is not registered as being available for use in the shelf label management system at that time point to transmit the system entry request to the shelf label management apparatus.

Further, in the above-mentioned shelf label management system according to the present invention: the shelf label management apparatus further includes system identification information transmitting means for transmitting, based on the reception of the system entry request, the system identification information for identifying a system in which the each of the plurality of electronic shelf label terminals that has transmitted the system entry request is to enter, to the each of the plurality of electronic shelf label terminals; and the plurality of electronic shelf label terminals each include system identification information registering means for registering the system identification information in the storage means.
With this configuration, the shelf label management apparatus can acquire the terminal identification information of the electronic shelf label terminal that is not registered as being available for use in the shelf label management system at that time point, and can register that electronic shelf label terminal as being available for use in the shelf label management system.

Further, in the above-mentioned shelf label management system according to the present invention: the shelf label management apparatus further includes system identification information transmitting means for transmitting, in response to start of the registration request receiving period, system identification information for identifying a system in which the each of the plurality of electronic shelf label terminals is to enter, to the each of the plurality of electronic shelf label terminals; and the system entry request receiving means receives the system entry request from the each of the plurality of electronic shelf label terminals that has received the system identification information.
With this configuration, the shelf label management apparatus registers at least the electronic shelf label terminal, for which transmission/reception with the shelf label management apparatus has been successful, as being available for use in the shelf label management system and sets the terminal as being entered therein, and hence it is possible to prevent a case in which an electronic shelf label terminal of another store possibly having a different communication environment is mistakenly registered as being entered in the system.

Further, in the above-mentioned shelf label management system according to the present invention: the plurality of electronic shelf label terminals each include: power-on detecting means for detecting power-on; registration completion determining means for determining, based on the detection of the power-on, whether or not information indicating whether or not the each of the plurality of electronic shelf label terminals is entered in the shelf label management system is recorded in storage means; and the system entry request transmitting means for transmitting, when the registration completion determining means determines that the each of the plurality of electronic shelf label terminals is not entered in the shelf label management system, the system entry request containing the terminal identification information for identifying the each of the plurality of electronic shelf label terminals to the shelf label management apparatus.
With this configuration, the shelf label management apparatus can manage the electronic shelf label terminal only with the terminal identification information, and hence it is possible to simplify the configuration of the system.

Further, in the above-mentioned shelf label management system according to the present invention, the plurality of electronic shelf label terminals each further include entry state changing means for changing, after receiving the system entry completion notification from the shelf label management apparatus, the information indicating whether or not the each of the plurality of electronic shelf label terminals is entered in the shelf label management system, which is recorded in the storage means, to information indicating that the each of the plurality of electronic shelf label terminals is entered in the shelf label management system.
With this configuration, in the electronic shelf label terminal, it is recorded that the electronic shelf label terminal has been reliably registered with the shelf label management apparatus as being entered in the system, and hence it is possible to use this information at the time of occurrence of some failure, and also to cause the electronic shelf label terminal to carry out an operation that is based on this information (for example, power consumption is reduced by operating a function relating to transmission/reception only when necessary).

Further, in the above-mentioned shelf label management system according to the present invention, the shelf label management apparatus further includes: link information receiving means for receiving link information containing the terminal identification information and product identification information from a terminal registration apparatus, which reads the terminal identification information and the product identification information respectively from code information, which indicates the terminal identification information displayed or printed on the each of the plurality of electronic shelf label terminals, and code information, which indicates the product identification information assigned to a product corresponding to product information to be displayed on the each of the plurality of electronic shelf label terminals; link information registering means for registering the terminal identification information and the product identification information, which are contained in the link information, in association with each other in link information storage means; and warning information output means for outputting warning information when the terminal identification information contained in the received link information does not match the terminal identification information recorded in the database.
When the electronic shelf label terminal that should be registered with a shelf label management apparatus is registered with a shelf label management apparatus of another shelf label management system, even if the link information between that electronic shelf label terminal and the product identification information is received, because the terminal identification information of that electronic shelf label terminal is not registered, the shelf label management apparatus can issue a warning based on an assumption that the link information has been acquired from an unknown electronic shelf label terminal. With this configuration, it is possible to prompt the user of the shelf label management system to cause that electronic shelf label terminal to make the system entry request again because the electronic shelf label terminal that should be registered as being available for use in the system is not registered yet for some reason.

Further, in the above-mentioned shelf label management system according to the present invention, the warning information output means of the shelf label management apparatus outputs the warning information when, with regard to an electronic shelf label terminal that is registered in the database by the terminal identification information registering means, the link information containing the terminal identification information of the electronic shelf label terminal has not been received for a predetermined period of time or longer since the registration.
When the shelf label management apparatus has registered an electronic shelf label terminal of another shelf label management system, which should not be registered with the shelf label management apparatus, the shelf label management apparatus cannot receive the link information between that electronic shelf label terminal and the product identification information because the link information is transmitted to the shelf label management apparatus of the another shelf label management system. Therefore, by issuing a warning about the presence of the electronic shelf label terminal for which the link information has not been acquired for a long time, it is possible to notify the user of the shelf label management system of a possibility that the electronic shelf label terminal that should be registered with the shelf label management apparatus of the another shelf label management system is registered by mistake.

Further, in the above-mentioned shelf label management system according to the present invention: the shelf label management apparatus further includes communication information transmitting means for transmitting, to the each of the plurality of electronic shelf label terminals, information on a next communication timing along with the system entry completion notification; the plurality of electronic shelf label terminals each further include communication information receiving means for receiving, from the shelf label management apparatus, the information on the next communication timing along with the system entry completion notification; and the shelf label management apparatus and the each of the plurality of electronic shelf label terminals perform communication in accordance with the next communication timing.
With this configuration, based on the management by the shelf label management apparatus, the electronic shelf label terminal needs to operate the communication function only when necessary, and hence it is possible to reduce the power consumption of the electronic shelf label terminal.

Further, according to the present invention, there is provided a shelf label management method for a shelf label management system including: a plurality of electronic shelf label terminals; and a shelf label management apparatus, the shelf label management method including:receiving, by system entry request receiving means of the shelf label management apparatus, a system entry request from system entry request transmitting means of each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system; registering, by terminal identification information registering means of the shelf label management apparatus, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system; giving, by system entered-state information registering means of the shelf label management apparatus, permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and transmitting, by system entry completion notification transmitting means of the shelf label management apparatus, a system entry completion notification to the each of the plurality of electronic shelf label terminals that has transmitted the system entry request, in response to the registration by the system entered-state information registering means of the fact that the each of the plurality of electronic shelf label terminals is entered in the shelf label management system.

Further, the above-mentioned shelf label management method according to the present invention further includes: detecting power-on by power-on detecting means of the each of the plurality of electronic shelf label terminals; determining, by registration completion determining means of the each of the plurality of electronic shelf label terminals, based on the detection of the power-on, whether or not system identification information for identifying the shelf label management system in which the each of the plurality of electronic shelf label terminals is to enter is recorded in storage means; and when the system identification information is not recorded in the storage means, transmitting, by the system entry request transmitting means of the each of the plurality of electronic shelf label terminals, the system entry request containing the terminal identification information for identifying the each of the plurality of electronic shelf label terminals to the shelf label management apparatus.

Further, the above-mentioned shelf label management method according to the present invention further includes: transmitting, by system identification information transmitting means of the shelf label management apparatus, based on the reception of the system entry request, the system identification information for identifying a system in which the each of the plurality of electronic shelf label terminals that has transmitted the system entry request is to enter, to the each of the plurality of electronic shelf label terminals; and registering, by system identification information registering means of the each of the plurality of electronic shelf label terminals, the system identification information in the storage means.

Further, the above-mentioned shelf label management method according to the present invention further includes: transmitting, by system identification information transmitting means of the shelf label management apparatus, in response to start of the registration request receiving period, system identification information for identifying a system in which the each of the plurality of electronic shelf label terminals is to enter, to the each of the plurality of electronic shelf label terminals; and receiving, by the system entry request receiving means of the shelf label management apparatus, the system entry request from the each of the plurality of electronic shelf label terminals that has received the system identification information.

Further, the above-mentioned shelf label management method according to the present invention further includes: detecting power-on by power-on detecting means of the each of the plurality of electronic shelf label terminals; determining, by registration completion determining means of the each of the plurality of electronic shelf label terminals, based on the detection of the power-on, whether or not information indicating whether or not the each of the plurality of electronic shelf label terminals is entered in the shelf label management system is recorded in storage means; and when it is determined by the registration completion determining means that the each of the plurality of electronic shelf label terminals is not entered in the shelf label management system, transmitting, by the system entry request transmitting means of the each of the plurality of electronic shelf label terminals, the system entry request containing the terminal identification information for identifying the each of the plurality of electronic shelf label terminals to the shelf label management apparatus.

Further, the above-mentioned shelf label management method according to the present invention further includes changing, by entry state changing means of the each of the plurality of electronic shelf label terminals, after receiving the system entry completion notification from the shelf label management apparatus, the information indicating whether or not the each of the plurality of electronic shelf label terminals is entered in the shelf label management system, which is recorded in the storage means, to information indicating that the each of the plurality of electronic shelf label terminals is entered in the shelf label management system.

Further, the above-mentioned shelf label management method according to the present invention further includes receiving, by link information receiving means of the shelf label management apparatus, link information containing the terminal identification information and product identification information from a terminal registration apparatus, which reads the terminal identification information and the product identification information respectively from code information, which indicates the terminal identification information displayed or printed on the each of the plurality of electronic shelf label terminals, and code information, which indicates the product identification information assigned to a product corresponding to product information to be displayed on the each of the plurality of electronic shelf label terminals; registering, by link information registering means of the shelf label management apparatus, the terminal identification information and the product identification information, which are contained in the link information, in association with each other in link information storage means; and outputting, by warning information output means of the shelf label management apparatus, warning information when the terminal identification information contained in the received link information does not match the terminal identification information recorded in the database.

Further, the above-mentioned shelf label management method according to the present invention further includes outputting, by the warning information output means of the shelf label management apparatus, the warning information when, with regard to an electronic shelf label terminal that is registered in the database by the terminal identification information registering means, the link information containing the terminal identification information of the electronic shelf label terminal has not been received for a predetermined period of time or longer since the registration.

Further, according to the present invention, there is provided a shelf label management apparatus for a shelf label management system including: a plurality of electronic shelf label terminals; and the shelf label management apparatus, the shelf label management apparatus including : system entry request receiving means for receiving a system entry request from each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system; terminal identification information registering means for registering, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system; system entered-state information registering means for giving permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and system entry completion notification transmitting means for transmitting a system entry completion notification to the each of the plurality of electronic shelf label terminals that has made the system entry request, in response to the registration by the system entered-state information registering means of the fact that the each of the plurality of electronic shelf label terminals is entered in the shelf label management system.

### Advantageous Effects of Invention

According to the present invention, even if a large number of electronic shelf label terminals are attached to shelves distributed in a store, it is only necessary to perform operation of powering on the electronic shelf label terminals in a period from a start time of a registration request receiving period of the shelf label management apparatus to an end time thereof so as to register terminal IDs of the electronic shelf label terminals with the shelf label management apparatus. In addition, as a result, based on a signal transmitted from the shelf label management apparatus, a system ID is registered with the electronic shelf label terminals. Withthis configuration, it is possible to perform system entry processing for the large number of electronic shelf label terminals without causing much trouble for a system administrator.

### Brief Description of Drawings

[FIG. 1] A block diagram illustrating a configuration of a shelf label management system.
[FIG. 2] A functional block diagram of a shelf label management apparatus and an electronic shelf label terminal.
[FIG. 3] A diagram illustrating a data example of a shelf label management table stored in the shelf label management apparatus.
[FIG. 4] A first diagram illustrating a processing flow of the shelf label management system.
[FIG. 5] A third diagram illustrating a processing flow of the shelf label management system.
[FIG. 6] A second diagram illustrating a processing flow of the shelf label management system.
[FIG. 7] A fourth diagram illustrating a processing flow of the shelf label management system.

### Description of Embodiments

### (First Embodiment)

Hereinbelow, description is given of a shelf label management system according to a first embodiment of the present invention with reference to the drawings.

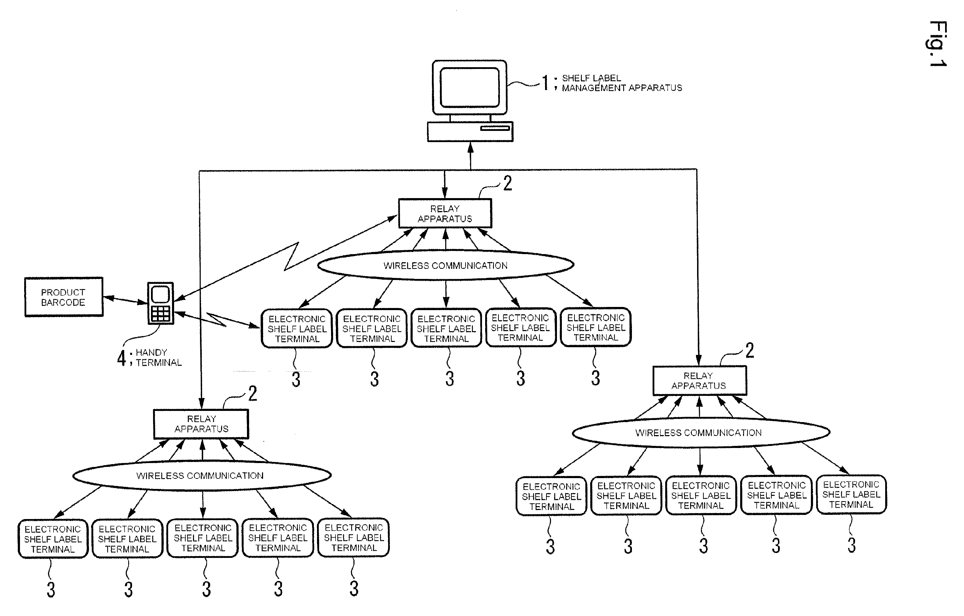

FIG. 1 is a block diagram illustrating a configuration of the shelf label management system according to this embodiment.
In this figure, reference numeral 1 denotes a shelf label management apparatus; 2, a relay apparatus; 3, an electronic shelf label terminal; and 4, a handy terminal. Through a communication network, the shelf label management apparatus 1 is connected to the relay apparatus 2, and the relay apparatus 2 is connected to the electronic shelf label terminal 3 and the handy terminal 4, thereby forming the shelf label management system. Note that, in this embodiment, wireless communication is used between the relay apparatus 2 and the electronic shelf label terminal 3 and between the relay apparatus 2 and the handy terminal 4.

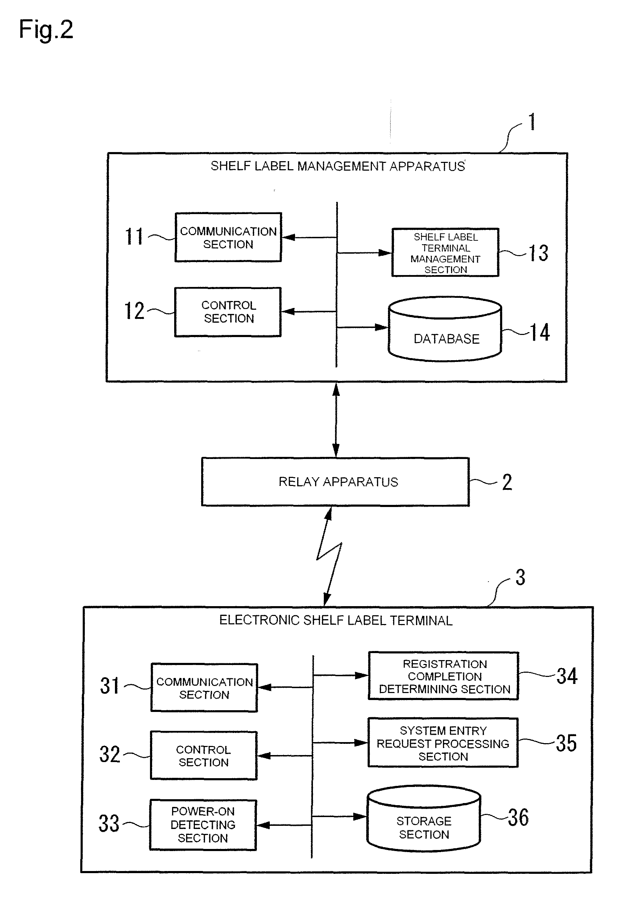

FIG. 2 is a functional block diagram of the shelf label management apparatus and the electronic shelf label terminal.
As illustrated in FIG. 2, the shelf label management apparatus 1 includes: a communication section 11 for communicating to the electronic shelf label terminal 3 via the relay apparatus 2; a control section 12 for controlling each processing section of the shelf label management apparatus 1; a shelf label terminal management section 13 for managing information regarding the electronic shelf label terminal 3; and a database 14 for storing, among others, a state indicating whether the electronic shelf label terminal is entered in the system.
Further, the electronic shelf label terminal 3 includes: a communication section 31 for communicating to the shelf label management apparatus 1 via the relay apparatus 2; a control section 32 for controlling each processing section of the terminal; a power-on detecting section 33 for detecting power-on; a registration completion determining section 34 for determining whether or not the registration of entry to the system has been completed; a system entry request processing section 35 for transmitting a request for entry to the shelf label management system; and a storage section 36 for storing information on a registration state as to entry to the system and other such information.

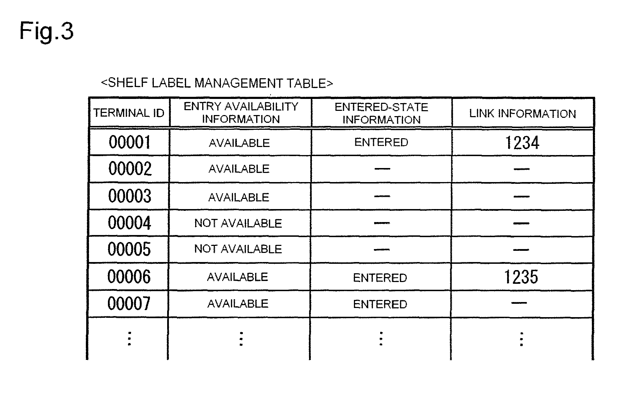

FIG. 3 is a diagram illustrating a data example of a shelf label management table stored in the shelf label management apparatus.
The shelf label management apparatus 1 stores, in the database 14, the shelf label management table as illustrated in FIG. 3.
In the shelf label management table, the following items are registered in association with one another. Those items are: a terminal ID, which is terminal identification information for identifying the electronic shelf label terminal 3; entry availability information indicating whether or not the electronic shelf label terminal 3 identified by the terminal ID is available for entry to the shelf label management system; entered-state information indicating whether or not the electronic shelf label terminal 3 identified by the terminal ID is actually allowed to enter in the shelf label management system and is entered therein; and link information indicating whether or not product information for displaying a product name, a product price, etc. is registered and linked to the electronic shelf label terminal 3 identified by the terminal ID (in this description, the link information is a product ID, which is product identification information for identifying the product). As for information on the terminal ID in the shelf label management table, when the shelf label management apparatus 1 receives a system entry request, which is automatically transmitted from the electronic shelf label terminal 3 at power-on thereof, in such a period as a registration-mode period in which the shelf label management apparatus can receive a registration request from the electronic shelf label terminal 3, the information is automatically registered based on the reception of the request. Alternatively, to give another example of the method of registering the terminal ID in the shelf label management table, the information on the terminal ID may be distributed in advance as information from a manufacturer of the terminal by means of a storage medium (CD) or the like, from which the shelf label management apparatus 1 can read the information. Then, the shelf label management apparatus 1 reads the information on the terminal ID recorded on the storage medium, to thereby register the terminal ID. Still alternatively, the shelf label management apparatus 1 maybe set, through operation thereof, to a state in which the terminal IDs can be registered one by one, and input means (keyboard or barcode scanner) of the shelf label management apparatus 1 may be used to read and register the terminal ID. Note that, this ID is desirably such an ID as a universally unique MAC address.

Further, information showing "available" as the entry availability information is automatically registered in association with the terminal ID when the system entry request is transmitted from the electronic shelf label terminal 3 in, for example, the registration-mode period. Alternatively, the entry availability information may be automatically updated to "available" when the terminal ID is registered. The electronic shelf label terminal 3 that has the entry availability information set to "available" is registered with the shelf label management apparatus 1, as a terminal available for use in the shelf label management system.
On the other hand, information showing "not available" as the entry availability information is registered by a system administrator when the system administrator determines that the electronic shelf label terminal 3 cannot enter in the system due to some state thereof.

Further, the entered-state information is registered when it is determined that the electronic shelf label terminal 3 that can enter in the system (the entry availability information is registered as "available") has actually made a request for entry to the shelf label management system to the shelf label management apparatus 1, and that the electronic shelf label terminal 3 is entered in the shelf label management system (in a state in which synchronization is achieved (communication link is established) with the electronic shelf label terminal 3 at predetermined intervals) because of the permission of the entry from the shelf label management apparatus 1.

Further, the link information indicates the product ID for identifying information including a product name and a price, which are to be displayed on a display portion of the electronic shelf label terminal 3. In this embodiment, for simplicity of description, it is assumed that the shelf label management apparatus 1 also has a table for products in order to store the product name, the price, supplementary/detailed information regarding the product, and other information, which are associated with the product ID.

Further, in this embodiment, the entry to the shelf label management system (system entry) refers to a state in which: the terminal ID of the electronic shelf label terminal 3 is registered in the shelf label management table; "available" is registered as the entry availability information; "entered" is registered as the entered-state information; a system ID transmitted from the shelf label management apparatus 1 is stored in the electronic shelf label terminal 3; and synchronous communication is possible between the shelf label management apparatus 1 and the electronic shelf label terminal 3.
The system ID is such information that includes, for example, information indicating a manufacturer of the shelf label management system, user information of a store that uses the shelf label management system (information for identifying a supermarket), and an identification code of the store (store-specific identification information).

Then, in the shelf label management system of this embodiment, the electronic shelf label terminal 3 detects the power-on, and then determines, based on the detection of the power-on, whether or not the system ID of the shelf label management system in which the electronic shelf label terminal is to enter is recorded in the storage section 36.
When the system ID is not recorded in the storage section 36, in order to cause the shelf label management apparatus to register the electronic shelf label terminal as a terminal available for use in the shelf label management system and in order to make a request for entry to the shelf label management system, the electronic shelf label terminal 3 transmits the system entry request containing the terminal ID of the electronic shelf label terminal to the shelf label management apparatus 1.
Meanwhile, when the system entry request is received from the electronic shelf label terminal 3 in a period from a start time of a registration request receiving period to an end time thereof, the shelf label management apparatus 1 registers the electronic shelf label terminal 3 as the terminal available for use in the shelf label management system, and, at the same time, permits the electronic shelf label terminal 3 to enter in the shelf label management system, with "entered" registered in the table. Specifically, the shelf label management apparatus 1 registers, in the shelf label management table of the database 14, the terminal ID of the electronic shelf label terminal 3 that has made the system entry request as the terminal ID of the electronic shelf label terminal 3 that can be registered with the shelf label management apparatus, and sets the entry availability information and the entered-state information to "available" and "entered", respectively.
Then, in response to the reception of the system entry request, the shelf label management apparatus 1 transmits a system entry completion notification to the electronic shelf label terminal 3 that has transmitted the system entry request. Further, based on the reception of the system entry request, the shelf label management apparatus 1 transmits, to the electronic shelf label terminal 3, the system ID for identifying a system in which the electronic shelf label terminal 3 that has transmitted the system entry request is to enter.

Further, in the shelf label management system of this embodiment, the shelf label management apparatus 1 receives the link information containing the terminal ID and the product ID from the handy terminal 4 (terminal registration apparatus), which has read the terminal ID and the product information, respectively, from code information (for example, barcode or two-dimensional code) indicating the terminal ID displayed or printed on the electronic shelf label terminal 3 and from code information (for example, barcode or two-dimensional code) indicating the product information assigned to a product corresponding to the product information to be displayed on the electronic shelf label terminal 3.
Further, the shelf label management apparatus 1 registers, in association with each other, the terminal ID and the product ID contained in the link information in the shelf label management table. Then, when the terminal ID contained in the received link information does not match any terminal ID recorded in the shelf label management table, the shelf label management apparatus 1 outputs warning information.

With this configuration, a user only needs to set the shelf label management apparatus 1 to a registration mode and power on the electronic shelf label terminal 3 when actually placing the electronic shelf label terminal 3 in a store, and can carry out the registration of entry to the system for a large number of electronic shelf label terminals 3.
By the way, if another store in the neighborhood performs a registration task for electronic shelf label terminals around the same time, there may occur a case in which the electronic shelf label terminal 3 of the store is registered with the system of the another store by mistake, or a case in which the electronic shelf label terminal 3 of the another store is registered with the system of the store by mistake.
However, it is possible to find the electronic shelf label terminal 3 that is mistakenly entered in the system by searching the electronic shelf label management table for the terminal ID contained in the link information transmitted from the handy terminal 4, or by searching the electronic shelf label management table for the terminal ID of the electronic shelf label terminal 3 for which the link information has not been transmitted for a predetermined period of time or longer after the electronic shelf label terminal 3 became available for entry to the system.
Thus, by outputting the warning information to such an electronic shelf label terminal 3 or the handy terminal 4, it is possible to prompt the user to carry out appropriate system entry processing. Owing to this, the shelf label management system that offers improved convenience to the user can be provided.

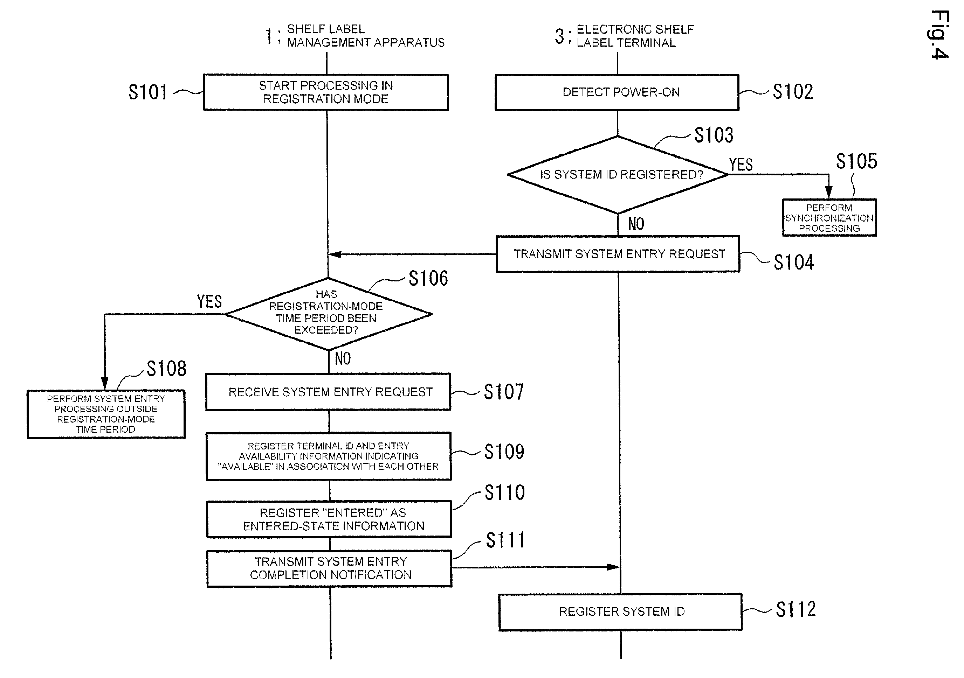

FIG. 4 is a first diagram illustrating a processing flow of the shelf label management system.
Description is given of details of processing performed in the shelf label management system when the electronic shelf label terminal 3 enters in the system.
First, the system administrator operates the shelf label management apparatus 1 so that the shelf label management apparatus 1 shifts to processing in the registration mode, and the shelf label management apparatus 1 that has detected the operation starts the processing in the registration mode (Step S101). The processing in the registration mode ends after a predetermined period of time. Alternatively, the system administrator may operate the shelf label management apparatus 1 to set "end of the registration mode". The predetermined period of time from the start to the end of the processing in the registration mode is programmed in advance and is, for example, on the order of several hours.
Then, the system administrator powers on approximately several thousand to ten thousand electronic shelf label terminals 3, which are attached or are to be attached to shelves in the store.

In the powered-on electronic shelf label terminal 3, the power-on detecting section 33 detects the power-on (Step S102), and then, the registration completion determining section 34 determines whether or not the system ID is registered in the storage section 36 of the electronic shelf label terminal (Step S103).
Then, when the system ID is not registered in the storage section 36, in order to register the electronic shelf label terminal as the terminal available for use in the shelf label management system and make a request for entry to the shelf label management system, the system entry request processing section 35 generates a signal of the system entry request containing the terminal ID of the electronic shelf label terminal, and instructs the communication section 31 to transmit the system entry request to the shelf label management apparatus 1.
The communication section 31 transmits the system entry request to the shelf label management apparatus 1 via the relay apparatus 2 (Step S104).
When the system ID is registered in Step S103, the electronic shelf label terminal 3 performs processing of achieving synchronization with the shelf label management apparatus 1 (Step S105).

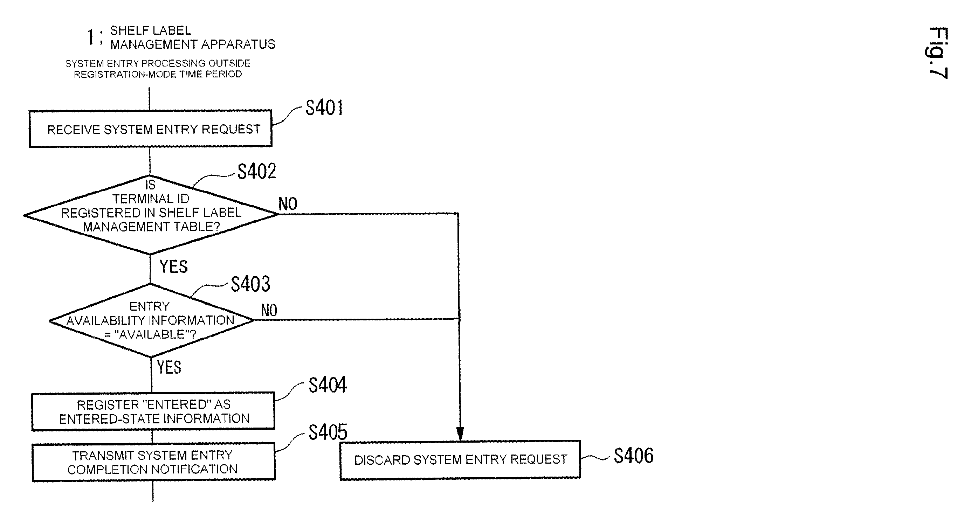

Next, the shelf label management apparatus 1, which counts an elapsed time period from the start time of the registration mode by a timer, determines whether or not the elapsed time period has exceeded a registration-mode time period recorded in advance on a memory or the like (Step S106). When the elapsed time period has not exceeded the registration-mode time period, the shelf label management apparatus 1 determines that the shelf label management apparatus 1 is in the registration mode, and receives the system entry request (Step S107).
Then, when the system entry request is received in the registration mode, the control section 12 uses the communication section 11 to receive the signal, which is then transferred to the shelf label terminal management section 13. When the shelf label management apparatus 1 is not in the registration mode, system entry processing outside the registration-mode time period is performed (Step S108). This is described with reference to FIG. 7.
After Step S107, the shelf label terminal management section 13 detects the terminal ID contained in the system entry request, and then registers the terminal ID and the entry availability information indicating "available" in association with each other in the shelf label management table (Step S109). With this, the electronic shelf label terminal 3 becomes the terminal available for use in the shelf label management system.

Subsequently, the shelf label management apparatus 1 actually permits the electronic shelf label terminal 3 to enter in the shelf label management system, and registers "entered", which indicates that communication to the electronic shelf label terminal 3 is possible, as the entered-state information (Step S110).
Then, the shelf label terminal management section 13 generates, for the electronic shelf label terminal 3 that has transmitted the system entry request, a signal of the system entry completion notification containing the terminal ID of that terminal, the system ID, and information indicating that the entry is permitted, and then instructs the communication section 11 to transmit the signal. In response thereto, the communication section 11 transmits the system entry completion notification to the electronic shelf label terminal 3 via the relay apparatus 2 (Step S111).

Next, after the electronic shelf label terminal 3 detects that the system entry completion notification has been transmitted to the electronic shelf label terminal based on the terminal ID contained in the signal and receives the system entry completion notification, the control section 32 registers, in the storage section 36, the system ID contained in the system entry completion notification (Step S112). With this, the system entry processing for the electronic shelf label terminal 3 is completed.

FIG. 7 is a fourth diagram illustrating a processing flow of the shelf label management system, and is a diagram illustrating a flow of processing performed by the shelf label management apparatus 1 for entry to the system outside the registration-mode time period.
It is assumed that the electronic shelf label terminal 3 has determined that the electronic shelf label terminal is not registered with the shelf label management system because, for example, the power-on was detected outside the registration-mode time period. It is also assumed that the electronic shelf label terminal 3 has transmitted the system entry request containing the terminal ID of the electronic shelf label terminal to the shelf label management apparatus 1.

The shelf label management apparatus 1 receives the system entry request from the electronic shelf label terminal 3 (Step S401). Subsequently, the shelf label management apparatus 1 refers to the shelf label management table of the database 14, to thereby check whether or not the terminal ID contained in the received system entry request is already registered (Step S402).
When that terminal ID is not registered in the shelf label management table, because the system entry request was made outside the registration-mode time period, the shelf label management apparatus 1 determines that "the electronic shelf label terminal 3 is not the terminal available for use in the shelf label management system", and discards the system entry request (Step S406).

When the terminal ID is already registered in the shelf label management table in Step S402, it is checked whether or not "available" is set as the entry availability information associated with that terminal ID in the shelf label management table (Step S403).
When "not available" is set as the entry availability information associated with that terminal ID, because the electronic shelf label terminal 3 is recognized as being unable to enter in the system for some reason, the shelf label management apparatus 1 determines that "the electronic shelf label terminal 3 is not the terminal available for use in the shelf label management system", and discards the system entry request (Step S406).
When "available" is set as the entry availability information associated with that terminal ID in the shelf label management table in Step S403, the shelf label management apparatus 1 actually permits the electronic shelf label terminal 3 to enter in the shelf label management system, and registers "entered", which indicates that communication to the electronic shelf label terminal 3 is possible, as the entered-state information (Step S404).

Then, the shelf label management apparatus 1 transmits, to the electronic shelf label terminal 3 that has transmitted the system entry request, the system entry completion notification containing the terminal ID of that terminal, the system ID, and the information indicating that the entry is permitted, via the relay apparatus 2 (Step S405).

As described above, when the shelf label management apparatus 1 is not in the registration mode (or does not have the registration mode), the electronic shelf label terminal 3 cannot enter in the shelf label management system unless the terminal ID is already registered in the shelf label management table of the shelf label management apparatus 1.
Specifically, unless the terminal ID is registered in advance in the shelf label management table in some way or another (for example, copying the terminal ID to the shelf label management table from a storage medium storing the terminal ID, or inputting the terminal IDs one by one by using input means), and "available" is registered as the entry availability information in advance, the electronic shelf label terminal 3 cannot enter in the shelf label management system.
On the other hand, as in this embodiment described with reference to FIG. 4, if the shelf label management apparatus 1 is provided with the registration mode so that all the electronic shelf label terminals 3 that attempted to enter in the shelf label management system within a period of the mode are registered as the terminals available for use in the shelf label management system, and, after that, the processing of permitting the entry to the system is carried out, it is possible to omit a task of registering the electronic shelf label terminal 3 in advance as the terminal available for use in the shelf label management system.

According to the processing described above, even in a case in which a large number of electronic shelf label terminals are attached to shelves distributed in a store, the system administrator only needs to perform the operation of powering on the electronic shelf label terminals 3 in the period from the start time of the registration request receiving period of the shelf label management apparatus 1 to the end time thereof, to thereby register the terminal IDs of the electronic shelf label terminals 3 with the shelf label management apparatus 1. Further, as a result thereof, the system ID is registered with the electronic shelf label terminal 3 based on the signal transmitted from the shelf label management apparatus 1. With this configuration, it is possible to perform the system entry processing for a large number of electronic shelf label terminals 3 without causing much trouble for the system administrator.

### (Second Embodiment)

Next, description is given of a shelf label management system according to a second embodiment of the present invention. The shelf label management system according to the second embodiment relates to a mechanism for allowing the electronic shelf label terminal 3 to make a system entry to the shelf label management system without using the "system ID".
In this embodiment, the entry to the shelf label management system (system entry) refers to a state in which: the terminal ID of the electronic shelf label terminal 3 is registered in the shelf label management table; "available" is registered as the entry availability information; "entered" is registered as the entered-state information; the electronic shelf label terminal 3 that has received the system entry completion notification transmitted from the shelf label management apparatus 1 registers "entered" as "information indicating whether or not the electronic shelf label terminal is entered in the shelf label management system", which is stored by the terminal itself; and synchronous communication is possible between the shelf label management apparatus 1 and the electronic shelf label terminal 3.
In the second embodiment, a system configuration diagram of the shelf label management system, a functional block diagram of the shelf label management apparatus 1 and the electronic shelf label terminal 3, and a diagram illustrating a data example of the shelf label management table are the same as in FIG. 1, FIG. 2, and FIG. 3, respectively, and thus detailed description thereof is omitted herein.

In the shelf label management system of this embodiment, in the electronic shelf label terminal 3, the power-on detecting section 33 detects the power-on. Then, based on the detection of the power-on, the registration completion determining section 34 reads the "information indicating whether or not the electronic shelf label terminal is entered in the shelf label management system" from the storage section 36, to thereby determine whether or not the electronic shelf label terminal is entered.
When the registration completion determining section 34 determines that the electronic shelf label terminal is "not entered", in order to cause the shelf label management apparatus to register the electronic shelf label terminal as the terminal available for use in the shelf label management system and in order to make a request for entry to the shelf label management system, the electronic shelf label terminal 3 transmits the system entry request containing the terminal ID of the electronic shelf label terminal to the shelf label management apparatus 1.
When the system entry request is received from the electronic shelf label terminal 3 in a period from a start time of a registration request receiving period to an end time thereof, the shelf label management apparatus 1 registers the electronic shelf label terminal 3 as the terminal available for use in the shelf label management system, and, at the same time, permits the electronic shelf label terminal 3 to enter in the shelf label management system, with "entered" registered in the table. Specifically, the shelf label management apparatus 1 registers, in the shelf label management table of the database 14, the terminal ID of the electronic shelf label terminal 3 that has made the system entry request as the terminal ID of the electronic shelf label terminal 3 that can be registered with the shelf label management apparatus, and sets the entry availability information and the entered-state information to "available" and "entered", respectively.
Then, in response to the reception of the system entry request, the shelf label management apparatus 1 transmits the system entry completion notification to the electronic shelf label terminal 3 that has transmitted the system entry request.
When the electronic shelf label terminal 3 receives the system entry completion notification, the electronic shelf label terminal 3 changes the "information indicating whether or not the electronic shelf label terminal is entered in the shelf label management system" in the storage section 36 to information indicating that the electronic shelf label terminal is "entered", which is then registered.

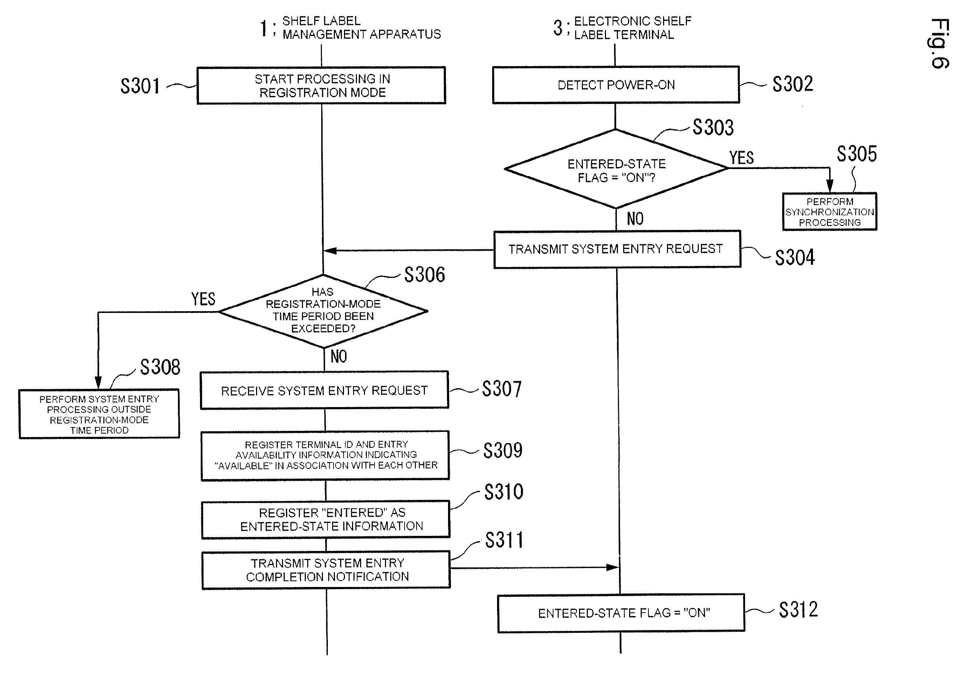

FIG. 6 is a second diagram illustrating a processing flow of the shelf label management system. With reference to the figure, description is given of details of processing performed in the shelf label management system when the electronic shelf label terminal 3 enters in the system.
First, the system administrator operates the shelf label management apparatus 1 so that the shelf label management apparatus 1 shifts to processing in the registration mode, and the shelf label management apparatus 1 that has detected the operation starts the processing in the registration mode (Step S301). The processing in the registration mode ends after a predetermined period of time. Alternatively, the system administrator may operate the shelf label management apparatus 1 to set "end of the registration mode". The predetermined period of time from the start to the end of the processing in the registration mode is programmed in advance and is, for example, on the order of several hours.
Then, the system administrator powers on approximately several thousand to ten thousand electronic shelf label terminals 3, which are attached or are to be attached to shelves in the store.

In the powered-on electronic shelf label terminal 3, after the power-on detecting section 33 detects the power-on thereof (Step S302), the registration completion determining section 34 refers to the "information indicating whether or not the electronic shelf label terminal is entered in the shelf label management system", which is stored in the storage section 36 of the electronic shelf label terminal. In this description, as this information, it is assumed that a "entered-state flag" exists in the storage section 36.
When the entered-state flag is "ON", the electronic shelf label terminal 3 is "entered". When the entered-state flag is "OFF", the electronic shelf label terminal 3 is "not entered".

When the entered-state flag is "OFF" in Step S303, in order to register the electronic shelf label terminal as the terminal available for use in the shelf label management system and make a request for entry to the shelf label management system, the system entry request processing section 35 generates a signal of the system entry request containing the terminal ID of the electronic shelf label terminal, and instructs the communication section 31 to transmit the system entry request to the shelf label management apparatus 1. Then, the communication section 31 transmits the system entry request to the shelf label management apparatus 1 via the relay apparatus 2 (Step S304).
When the entered-state flag is "ON" in Step S303, the electronic shelf label terminal 3 performs processing for the synchronous communication with respect to the shelf label management apparatus 1 (Step S305).

Next, the shelf label management apparatus 1, which counts the elapsed time period from the start time of the registration mode by the timer, determines whether or not the elapsed time period has exceeded the registration-mode time period recorded in advance on a memory or the like (Step S306) . When the elapsed time period has not exceeded the registration-mode time period, the shelf label management apparatus 1 determines that the shelf label management apparatus 1 is in the registration mode, and receives the system entry request (Step S307).
Then, when the system entry request is received in the registration mode, the control section 12 uses the communication section 11 to receive the signal, which is then transferred to the shelf label terminal management section 13. When the shelf label management apparatus 1 is not in the registration mode, the system entry processing outside the registration-mode time period is performed (Step S308). The system entry processing outside the registration-mode time period has been already described in the first embodiment with reference to FIG. 7 (note that, in this embodiment, the system entry completion notification does not contain the system ID in Step S405).

After Step S307, the shelf label terminal management section 13 detects the terminal ID contained in the system entry request, and then registers the terminal ID and the entry availability information indicating "available" in association with each other in the shelf label management table (Step S309). With this, the electronic shelf label terminal 3 becomes the terminal available for use in the shelf label management system.
Next, the shelf label management apparatus 1 actually permits the electronic shelf label terminal 3 to enter in the shelf label management system, and registers "entered", which indicates that communication to the electronic shelf label terminal 3 is possible, as the entered-state information (Step S310).

Then, the shelf label terminal management section 13 generates, for the electronic shelf label terminal 3 that has transmitted the system entry request, a signal of the system entry completion notification containing the terminal ID of that terminal and information indicating that the entry is permitted, and then instructs the communication section 11 to transmit the signal. In response thereto, the communication section 11 transmits the system entry completion notification to the electronic shelf label terminal 3 via the relay apparatus 2 (Step S311).
Next, when the electronic shelf label terminal 3 receives the system entry completion notification containing the terminal ID of the electronic shelf label terminal, the control section 32 registers "ON" as the entered-state flag in the storage section 36 (Step S312). With this, the system entry processing for the electronic shelf label terminal 3 is completed.

According to the processing described above, even in a case in which a large number of electronic shelf label terminals are attached to shelves distributed in a store, the system administrator only needs to perform the operation of powering on the electronic shelf label terminals 3 in the period from the start time of the registration request receiving period of the shelf label management apparatus 1 to the end time thereof, to thereby register the terminal IDs of the electronic shelf label terminals 3 with the shelf label management apparatus 1. Further, based on the system entry completion notification transmitted from the shelf label management apparatus 1, the electronic shelf label terminal 3 updates the "information indicating whether or not the electronic shelf label terminal is entered in the shelf label management system" to "entered". Therefore, it is possible to perform the system entry processing for a large number of electronic shelf label terminals 3 without causing much trouble for the system administrator.
In addition, the electronic shelf label terminal ID is the only ID used for management of the electronic shelf label terminal 3, and hence the configuration of the system can be simplified.

As described above, in the first embodiment and the second embodiment, the electronic shelf label terminal 3 acquires the system entry completion notification from the shelf label management apparatus 1 when the systementryprocessing is completed. Therefore, when it is necessary to conduct an investigation as to the state indicating whether the electronic shelf label terminal is entered in the system, it is possible to understand the state accurately by examining information regarding the completion of the system entry for both the electronic shelf label terminal and the shelf label management apparatus.
Further, after acquiring the system entry completion notification, the electronic shelf label terminal 3 is manageable by the shelf label management apparatus 1 based on the terminal ID. Specifically, the shelf label management apparatus 1 can control, for each electronic shelf label terminal 3, such operations as communication and display of the electronic shelf label terminal 3. For example, the shelf label management apparatus 1 can transmit display information only to a particular electronic shelf label terminal 3 to cause display contents thereof to be switched.
Further, the shelf label management apparatus 1 maybe provided with communication information transmitting means so as to transmit, to the electronic shelf label terminal 3, information regarding the next communication timing along with the system entry completion notification. In general, in many cases, the electronic shelf label terminal 3 is a small-size terminal and is driven by a battery, and hence it is desired that the electronic shelf label terminal 3 have low power consumption. After acquiring the information regarding the communication timing, the electronic shelf label terminal 3 does not need to have a communication function thereof constantly set to be active, but only needs to operate the communication function at a specified communication timing. Therefore, it is also possible to reduce the power consumption.

### (Third Embodiment)

In a third embodiment, description is given of an example of operation performed in the shelf label management system after allowing the electronic shelf label terminal 3 to enter in the system as the terminal available for use by the shelf label management apparatus 1 by implementing the first or second embodiment.

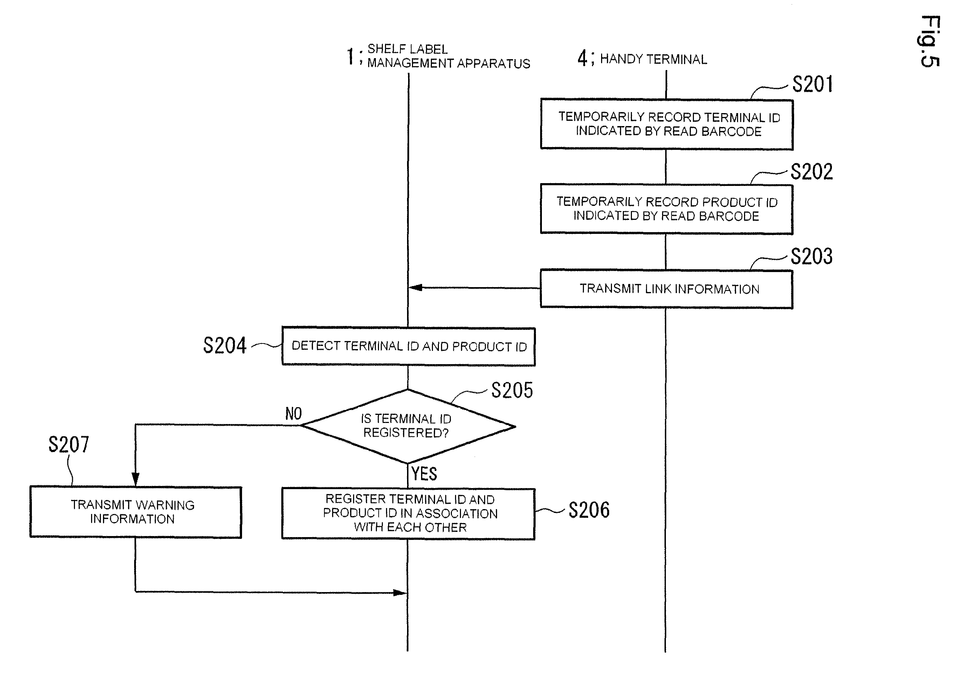

FIG. 5 is a third diagram illustrating a processing flow of the shelf label management system.
Next, description is given of details of processing performed in the shelf label management system at the time of product linking.
The product linking herein refers to processing of associating the terminal ID of the electronic shelf label terminal 3 and the product ID with each other in order to cause each electronic shelf label terminal 3 to display the name and the price of a product. The processing for the product linking can be performed by the shelf label management apparatus 1 even when the shelf label management apparatus 1 is not performing the processing in the registration mode.
When the system administrator performs a task of the product linking, the handy terminal 4 is used. The handy terminal 4 is provided with: a barcode reader function for reading code information (in this example, barcode) ; a transmission function for transmitting information read on the barcode to the shelf label management apparatus 1 via the relay apparatus 2; a display function for displaying information received from the shelf label management apparatus 1; and a registration receiving function for receiving registration of various kinds of information from the user.
Note that, the following method may also be employed. That is, the electronic shelf label terminal 3 is installed with a contactless IC chip, in which the terminal ID of the electronic shelf label terminal 3 is stored. The product is attached with a contactless IC chip storing the product ID. The handy terminal 4 is provided with a reader function for reading the contactless IC chip, thereby reading the terminal ID and the product ID from the contactless IC chips and associating the IDs with each other. Alternatively, input means or the like of the handy terminal may be used to input the IDs, which are to be associated with each other.

First, when the system administrator reads, by means of the handy terminal 4, a barcode displayed on a screen of the electronic shelf label terminal 3 or a barcode printed or attached on the enclosure of the electronic shelf label terminal 3, the handy terminal 4 temporarily records the terminal ID indicated by the barcode on a memory or the like (Step S201).
Further, when the system administrator reads, by means of the handy terminal 4, a barcode printed on the package of the product, the handy terminal 4 temporarily records the product ID indicated by the barcode on the memory or the like (Step S202). Then, an instruction to transmit the link information is registered on the handy terminal from an input portion thereof.
When the handy terminal 4 receives the instruction to transmit the link information from the input portion, the handy terminal 4 transmits the link information containing the terminal ID and the product ID that are temporarily recorded on the memory, to the shelf label management apparatus 1 via the relay apparatus 2 (Step S203).

Next, when the shelf label management apparatus 1 receives the link information, the control section 12 transfers the link information to the shelf label terminal management section 13. Subsequently, the shelf label terminal management section 13 detects the terminal ID and the product ID contained in the link information (Step S204), and then determines whether or not the terminal ID is registered in the shelf label management table (Step S205). Then, when the terminal ID is registered in the shelf label management table, the shelf label terminal management section 13 registers the IDs detected in Step S204 in the shelf label management table in association with each other (Step S206).
With this, if the electronic shelf label terminal 3 has the terminal ID associated with the entry availability information indicating "available", the entered-state information indicating "entered", and the registered link information, the electronic shelf label terminal 3 is entered in the shelf label management system, and is also displaying the information on the product. In the shelf label management table of FIG. 3, terminal IDs 00001 and 00006 correspond to such electronic shelf label terminals.
By the way, if the electronic shelf label terminal 3 has the terminal ID associated with the entry availability information indicating "available" and the entered-state information indicating "-", which means "unregistered", the electronic shelf label terminal 3 can enter in the shelf label management system but has not been entered in the shelf label management system (corresponding to terminal IDs 00002 and 00003 of FIG. 3) . Further, if the electronic shelf label terminal 3 has the terminal ID associated with the entry availability information indicating "available", the entered-state information indicating "entered", and the link information indicating "-", which means "unregistered", the electronic shelf label terminal 3 is not linked to the product (corresponding to a terminal ID 00007 of FIG. 3). Further, if the electronic shelf label terminal 3 has the terminal ID associated with the entry availability information indicating "not available", such information is registered because, for example, the system administrator has determined that the electronic shelf label terminal 3 cannot enter in the system due to a failure or the like (corresponding to terminal IDs 00004 and 00005 of FIG. 3).

Here, when the shelf label management apparatus 1 is in an environment in which transmission/reception of radio signals is possible between the electronic shelf label terminal 3 existing in another store nearby and the relay apparatus 2 of the shelf label management system to which that shelf label management apparatus 1 belongs (when the radio wave intensity does not attenuate sufficiently even after passing through walls), the shelf label management apparatus 1 receives the system entry request transmitted through the above-mentioned processing of Step S104 performed in the shelf label management system of the another store. In such a case, the shelf label management apparatus 1 registers the terminal ID of the electronic shelf label terminal 3 of the another store in the shelf label management table, and keeps holding the terminal ID without having the link information registered from the handy terminal 4 regarding the terminal ID of the electronic shelf label terminal 3 of the another store.
For example, if the ID of the electronic shelf label terminal 3 of the another store is "ID=200", the terminal ID "200" and the link information indicating "-" are registered in association with each other, and this state is left as it is. Then, after the terminal ID is registered, the shelf label terminal management section 13 of the shelf label management apparatus 1 counts how long the link information has been left unregistered, and then transmits the warning information to the electronic shelf label terminal 3 having the terminal ID for which the link information has not been registered for a given time period. Alternatively, the terminal ID and the warning information may be output to a display screen of the shelf label management apparatus 1. With this configuration, it is possible to warn the administrator that the electronic shelf label terminal 3 that should be registered with the shelf label management system of the another store is registered.

On the other hand, as for the shelf label management apparatus 1, when the electronic shelf label terminal 3 that should be entered in the shelf label management system to which the shelf label management apparatus belongs has been mistakenly entered in the shelf label management system of the another store nearby, the terminal ID of that electronic shelf label terminal 3 is not registered in the shelf label management table stored in the shelf label management apparatus.
Specifically, if the terminal ID of the electronic shelf label terminal 3 that has been entered in the shelf label management system of the another store is "100", the terminal ID "100" is not registered in the shelf label management table. Then, if the link information is received from the handy terminal 4 in this state, the shelf label terminal management section 13 transmits the warning information to the handy terminal because, though the link information contains the terminal ID "100" and the product ID, the terminal ID "100" is not registered in the shelf label management table. Alternatively, the terminal ID and the warning information may be output to the display screen of the shelf label management apparatus 1. With this configuration, it is possible to warn the administrator that there is an electronic shelf label terminal 3 that has been registered with the shelf label management system of the another store by mistake.

Note that, the shelf label management apparatus and the electronic shelf label terminal described above each include a computer system provided therein. Then, the process steps in the above-mentioned processing are stored as a program in a computer-readable storage medium, and the computer reads out and executes the program, to thereby implement the above-mentioned processing. Here, the computer-readable storage medium includes a magnetic disk, a magneto-optical disk, a CD-ROM, a DVD-ROM, a semiconductor memory, and the like. Alternatively, the computer program may be distributed to the computer via communication lines, and a computer that has received the distributed program may execute the program.

The above-mentioned program may implement only part of the functions described above. Further, the above-mentioned program may be a so-called differential file (differential program) capable of implementing the functions described above in combination with a program that is already recorded in the computer system.

### Industrial Applicability

The present invention can be used for a shelf label management system, which is used for managing electronic shelf label terminals for displaying names, prices, etc. of products.

### Reference Signs List

- 1: shelf label management apparatus
- 2: relay apparatus
- 3: electronic shelf label terminal
- 4: handy terminal

## Claims

1. A shelf label management system, comprising:
a plurality of electronic shelf label terminals; and
a shelf label management apparatus, wherein:
the shelf label management apparatus comprises:
system entry request receiving means for receiving a system entry request from each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system;
terminal identification information registering means for registering, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system;
system entered-state information registering means for giving permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and
system entry completion notification transmitting means for transmitting a system entry completion notification to the each of the plurality of electronic shelf label terminals that has transmitted the system entry request, in response to the registration by the system entered-state information registering means of the fact that the each of the plurality of electronic shelf label terminals is entered in the shelf label management system; and
the plurality of electronic shelf label terminals each comprise system entry request transmitting means for transmitting the system entry request to the shelf label management apparatus, the system entry request making the request for the entry to the shelf label management system so that the each of the plurality of electronic shelf label terminals is registered as the terminal available for use in the shelf label management system.

2. A shelf label management system according to claim 1, wherein:
the plurality of electronic shelf label terminals each comprise:
power-on detecting means for detecting power-on; and
registration completion determining means for determining, based on the detection of the power-on, whether or not system identification information for identifying the shelf label management system in which the each of the plurality of electronic shelf label terminals is to enter is recorded in storage means; and
when the system identification information is not recorded in the storage means, the system entry request transmitting means transmits the system entry request containing the terminal identification information for identifying the each of the plurality of electronic shelf label terminals to the shelf label management apparatus.

3. A shelf label management system according to claim 1 or 2, wherein:
the shelf label management apparatus further comprises system identification information transmitting means for transmitting, based on the reception of the system entry request, the system identification information for identifying a system in which the each of the plurality of electronic shelf label terminals that has transmitted the system entry request is to enter, to the each of the plurality of electronic shelf label terminals; and
the plurality of electronic shelf label terminals each comprise system identification information registering means for registering the system identification information in the storage means.

4. A shelf label management system according to claim 1, wherein:
the shelf label management apparatus further comprises system identification information transmitting means for transmitting, in response to start of the registration request receiving period, system identification information for identifying a system in which the each of the plurality of electronic shelf label terminals is to enter, to the each of the plurality of electronic shelf label terminals; and
the system entry request receiving means receives the system entry request from the each of the plurality of electronic shelf label terminals that has received the system identification information.

5. A shelf label management system according to claim 1, wherein the plurality of electronic shelf label terminals each comprise:
power-on detecting means for detecting power-on;
registration completion determining means for determining, based on the detection of the power-on, whether or not information indicating whether or not the each of the plurality of electronic shelf label terminals is entered in the shelf label management system is recorded in storage means; and
the system entry request transmitting means for transmitting, when the registration completion determining means determines that the each of the plurality of electronic shelf label terminals is not entered in the shelf label management system, the system entry request containing the terminal identification information for identifying the each of the plurality of electronic shelf label terminals to the shelf label management apparatus.

6. A shelf label management system according to claim 5, wherein the plurality of electronic shelf label terminals each further comprise entry state changing means for changing, after receiving the system entry completion notification from the shelf label management apparatus, the information indicating whether or not the each of the plurality of electronic shelf label terminals is entered in the shelf label management system, which is recorded in the storage means, to information indicating that the each of the plurality of electronic shelf label terminals is entered in the shelf label management system.

7. A shelf label management system according to any one of claims 1 to 6, wherein the shelf label management apparatus further comprises:
link information receiving means for receiving link information containing the terminal identification information and product identification information from a terminal registration apparatus, which reads the terminal identification information and the product identification information respectively from code information, which indicates the terminal identification information displayed or printed on the each of the plurality of electronic shelf label terminals, and code information, which indicates the product identification information assigned to a product corresponding to product information to be displayed on the each of the plurality of electronic shelf label terminals;
link information registering means for registering the terminal identification information and the product identification information, which are contained in the link information, in association with each other in link information storage means; and
warning information output means for outputting warning information when the terminal identification information contained in the received link information does not match the terminal identification information recorded in the database.

8. A shelf label management system according to claim 7, wherein the warning information output means of the shelf label management apparatus outputs the warning information when, with regard to an electronic shelf label terminal that is registered in the database by the terminal identification information registering means, the link information containing the terminal identification information of the electronic shelf label terminal has not been received for a predetermined period of time or longer since the registration.

9. A shelf label management system according to any one of claims 1 to 8, wherein:
the shelf label management apparatus further comprises communication information transmitting means for transmitting, to the each of the plurality of electronic shelf label terminals, information on a next communication timing along with the system entry completion notification;
the plurality of electronic shelf label terminals each further comprise communication information receiving means for receiving, from the shelf label management apparatus, the information on the next communication timing along with the system entry completion notification; and
the shelf label management apparatus and the each of the plurality of electronic shelf label terminals perform communication in accordance with the next communication timing.

10. A shelf label management method for a shelf label management system comprising:
a plurality of electronic shelf label terminals; and
a shelf label management apparatus,
the shelf label management method comprising:
receiving, by system entry request receiving means of the shelf label management apparatus, a system entry request from system entry request transmitting means of each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system;
registering, by terminal identification information registering means of the shelf label management apparatus, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system;
giving, by system entered-state information registering means of the shelf label management apparatus, permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and
transmitting, by system entry completion notification transmitting means of the shelf label management apparatus, a system entry completion notification to the each of the plurality of electronic shelf label terminals that has transmitted the system entry request, in response to the registration by the system entered-state information registering means of the fact that the each of the plurality of electronic shelf label terminals is entered in the shelf label management system.

11. A shelf label management method according to claim 10 further comprising:
detecting power-on by power-on detecting means of the each of the plurality of electronic shelf label terminals;
determining, by registration completion determining means of the each of the plurality of electronic shelf label terminals, based on the detection of the power-on, whether or not system identification information for identifying the shelf label management system in which the each of the plurality of electronic shelf label terminals is to enter is recorded in storage means; and
when the system identification information is not recorded in the storage means, transmitting, by the system entry request transmitting means of the each of the plurality of electronic shelf label terminals, the system entry request containing the terminal identification information for identifying the each of the plurality of electronic shelf label terminals to the shelf label management apparatus.

12. A shelf label management method according to claim 10 or 11, further comprising:
transmitting, by system identification information transmitting means of the shelf label management apparatus, based on the reception of the system entry request, the system identification information for identifying a system in which the each of the plurality of electronic shelf label terminals that has transmitted the system entry request is to enter, to the each of the plurality of electronic shelf label terminals; and
registering, by system identification information registering means of the each of the plurality of electronic shelf label terminals, the system identification information in the storage means.

13. A shelf label management method according to claim 10, further comprising:
transmitting, by system identification information transmitting means of the shelf label management apparatus, in response to start of the registration request receiving period, system identification information for identifying a system in which the each of the plurality of electronic shelf label terminals is to enter, to the each of the plurality of electronic shelf label terminals; and
receiving, by the system entry request receiving means of the shelf label management apparatus, the system entry request from the each of the plurality of electronic shelf label terminals that has received the system identification information.

14. A shelf label management method according to claim 10, further comprising:
detecting power-on by power-on detecting means of the each of the plurality of electronic shelf label terminals;
determining, by registration completion determining means of the each of the plurality of electronic shelf label terminals, based on the detection of the power-on, whether or not information indicating whether or not the each of the plurality of electronic shelf label terminals is entered in the shelf label management system is recorded in storage means; and
when it is determined by the registration completion determining means that the each of the plurality of electronic shelf label terminals is not entered in the shelf label management system transmitting, by the system entry request transmitting means of the each of the plurality of electronic shelf label terminals, the system entry request containing the terminal identification information for identifying the each of the plurality of electronic shelf label terminals to the shelf label management apparatus.

15. A shelf label management method according to claim 14, further comprising changing, by entry state changing means of the each of the plurality of electronic shelf label terminals, after receiving the system entry completion notification from the shelf label management apparatus, the information indicating whether or not the each of the plurality of electronic shelf label terminals is entered in the shelf label management system, which is recorded in the storage means, to information indicating that the each of the plurality of electronic shelf label terminals is entered in the shelf label management system.

16. A shelf label management system according to any one of claims 10 to 15, further comprising:
receiving, by link information receiving means of the shelf label management apparatus, link information containing the terminal identification information and product identification information from a terminal registration apparatus, which reads the terminal identification information and the product identification information respectively from code information, which indicates the terminal identification information displayed or printed on the each of the plurality of electronic shelf label terminals, and code information, which indicates the product identification information assigned to a product corresponding to product information to be displayed on the each of the plurality of electronic shelf label terminals;
registering, by link information registeringmeans of the shelf label management apparatus, the terminal identification information and the product identification information, which are contained in the link information, in association with each other in link information storage means; and
outputting, by warning information output means of the shelf label management apparatus, warning information when the terminal identification information contained in the received link information does not match the terminal identification information recorded in the database.

17. A shelf label management method according to claim 16, further comprising outputting, by the warning information output means of the shelf label management apparatus, the warning information when, with regard to an electronic shelf label terminal that is registered in the database by the terminal identification information registering means, the link information containing the terminal identification information of the electronic shelf label terminal has not been received for a predetermined period of time or longer since the registration.

18. A shelf label management method according to any one of claims 10 to 17, further comprising:
transmitting, by communication information transmitting means of the shelf label management apparatus, to the each of the plurality of electronic shelf label terminals, information on a next communication timing along with the system entry completion notification;
receiving, by communication information receiving means of the each of the plurality of electronic shelf label terminals, from the shelf label management apparatus, the information on the next communication timing along with the system entry completion notification; and
performing, by the shelf label management apparatus and the each of the plurality of electronic shelf label terminals, communication in accordance with to the next communication timing.

19. A shelf label management apparatus for a shelf label management system comprising:
a plurality of electronic shelf label terminals; and
the shelf label management apparatus,
the shelf label management apparatus comprising:
system entry request receiving means for receiving a system entry request from each of the plurality of electronic shelf label terminals in a period from a start time of a registration request receiving period to an end time thereof, the system entry request making a request for entry to the shelf label management system so that the each of the plurality of electronic shelf label terminals is registered as a terminal available for use in the shelf label management system;
terminal identification information registering means for registering, in a database, terminal identification information of the each of the plurality of electronic shelf label terminals that has made the system entry request, which is received by the system entry request receiving means in the period from the start time of the registration request receiving period to the end time thereof, as terminal identification information of an electronic shelf label terminal available for use in the shelf label management system;
system entered-state information registering means for giving permission of entry to the shelf label management system to the each of the plurality of electronic shelf label terminals that has made the system entry request, which is received by the system entry request receiving means in the period from the start time of the registration request receiving period to the end time thereof, and registering, in the database, a fact that the each of the plurality of electronic shelf label terminals is entered in the shelf label management system; and
system entry completion notification transmitting means for transmitting a system entry completion notification to the each of the plurality of electronic shelf label terminals that has transmitted the system entry request, in response to the registration by the system entered-state information registering means of the fact that the each of the plurality of electronic shelf label terminals is entered in the shelf label management system.
